# EUROPÄISCHE PATENTANMELDUNG

(11) **EP 1 009 102 A2**
(43) Veröffentlichungstag der Anmeldung: **14.06.2000**
(21) Anmeldenummer: 99123382.6
(22) Anmeldetag: 24.11.1999
(51) Int. Cl.: H04B 1/38

(54) **Kommunikationseinrichtung**

(30) Priorität: 09.12.1998 DE 19856666
(71) Anmelder: ROBERT BOSCH GMBH, 70442 Stuttgart (DE)
(72) Erfinder: Hasemann, Jörg-Michael, 27339 Riede (DE); Pisecky, Manfred, 1220 Wien (AT)

(57) **Zusammenfassung**

Es wird ein Kommunikationseinrichtung (1) vorgeschlagen, die nach Art einer Armbanduhr vorzugsweise am Handgelenk tragbar ist und mindestens
- eine Uhr,
- eine Mobilfunkkomponente,
- eine Anzeigevorrichtung (3) zur Wiedergabe von Informationen
- eine Eingabevorrichtung (4) insbesondere zur Eingabe von Steuerinformationen
- Speichermittel zum Abspeichern und wahlweisen Aufrufen von Informationen und
- eine Stromversorgung
umfaßt.

## Beschreibung

Die Erfindung betrifft eine Kommunikationseinrichtung, die nach Art einer Armbanduhr vorzugsweise am Handgelenk tragbar ist. Erfindungsgemäß soll eine solche Kommunikationseinrichtung eine Uhr, eine Mobilfunkkomponente, eine Anzeigevorrichtung zur Wiedergabe von Informationen, eine Eingabevorrichtung insbesondere zur Eingabe von Steuerinformationen, Speichermittel zum Abspeichern und wahlweisen Aufrufen von Informationen und eine Stromversorgung umfassen.

Aus der Praxis bekannt sind Armbanduhren mit verschiedenen weiteren Funktionskomponenten, wie z.B. einem Taschenrechner, einem Thermometer oder auch einem Kompaß.

Eine Kommunikationseinrichtung mit dem Funktionsumfang eines Mobiltelefons und einer Uhr, wie sie erfindungsgemäß vorgeschlagen wird, die nach Art einer Armbanduhr getragen werden kann, ist bislang nicht bekannt.

Die erfindungsgemäße Kommunikationseinrichtung muß, um überhaupt am Handgelenk getragen werden zu können, eine kompakte, leichte Bauform aufweisen, was sich insbesondere im Hinblick auf die Akzeptanz des Benutzers als vorteilhaft erweist.

Im Rahmen der erfindungsgemäßen Kommunikationseinrichtung könnte eine Mobilfunkkomponente nach GSM- oder UMTS-Standard zum Einsatz kommen. Bei der Uhr könnte es sich in vorteilhafter Weise um eine Echtzeituhr, vorzugsweise eine Funkuhr, handeln.

Die Anzeigevorrichtung der erfindungsgemäßen Kommunikationseinrichtung dient in erster Linie zur Wiedergabe von Informationen, die in Zusammenhang mit der Mobilfunkkomponente stehen, wie z.B. Telefonnummern, Gebühreninformationen, der Inhalt einer Mailbox, etc.. Die Anzeigevorrichtung kann aber auch die aktuelle Uhrzeit wiedergeben. In Anbetracht der anzustrebenden sehr leichten und kompakten Bauweise der erfindungsgemäßen Kommunikationseinrichtung ist es von Vorteil, wenn es sich bei der Anzeigevorrichtung um einen Flachbildschirm handelt. In diesem Zusammenhang haben sich LCD-Displays als besonders leistungsfähig und robust erwiesen. Alternativ dazu ließen sich auch platzsparende Virtual Retinal Displays verwenden.

Auch die Eingabevorrichtung der erfindungsgemäßen Kommunikationseinrichtung kann in vorteilhafter Weise in Verbindung mit der Mobilfunkkomponente genutzt werden, beispielsweise zum Wählen einer Teilnehmernummer. Als besonders zuverlässig erweist sich in diesem Zusammenhang eine Tastatur, die im Hinblick auf die anzustrebende Kompaktheit der erfindungsgemäßen Kommunikationseinrichtung in vorteilhafter Weise mit Sensortasten ausgestattet sein könnte.

Alternativ oder auch in Ergänzung zu einer Tastatur könnte die erfindungsgemäße Kommunikationseinrichtung auch ein Touchscreen umfassen. Ein solches Touchscreen könnte neben seiner Funktion als Eingabevorrichtung auch gleichzeitig als Anzeigevorrichtung dienen. Diese Vereinigung von Anzeige- und Eingabevorrichtung in einer Komponente ermöglicht eine besonders kompakte Bauform, ohne daß dadurch die Anzeigequalität und die Bedienbarkeit beeinträchtigt werden.

In diesem Zusammenhang ist es außerdem von Vorteil, wenn die Eingabe über das Touchscreen mit Hilfe eines speziellen Pens erfolgt. Derartige Pens sind beispielsweise als Bedienelemente von sogenannten 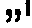 Personal Data Assistents" (PDA) bekannt.

Bei entsprechender Ausstattung mit einem Mikrofon und Lautsprechermitteln könnte der Pen zusätzlich noch die Funktion eines Hörers für die Mobilfunkkomponente übernehmen. Die Lautsprechermittel könnten dazu in vorteilhafter Weise in Form einer Miniaturhörkapsel realisiert sein. Vorteilhaft wäre in diesem Zusammenhang noch, wenn der Pen ausziehbar wäre, so daß er einerseits in einer möglichst handlichen Form für die Bedienung des Touchscreens zur Verfügung stünde und im Falle der Nichtbenutzung mitgeführt werden könnte und andererseits auch ein an den jeweiligen Benutzer der Mobilfunkkomponente angepaßter Abstand zwischen dem Mikrofon und den Lautsprechermitteln eingestellt werden könnte.

Im Hinblick auf die Benutzerfreundlichkeit der erfindungsgemäßen Kommunikationseinrichtung ist es von Vorteil, wenn die Verbindung zwischen dem als Hörer dienenden Pen und der übrigen Mobilfunkkomponente drahtlos ist, was in vorteilhafter Weise per Infrarot, Funk oder auch als modulierter Wechselstrom durch den Körper des Benutzers realisiert werden kann.

Außerdem erweist es sich in diesem Zusammenhang als vorteilhaft, wenn der Pen auch mit eigenen Eingabemitteln insbesondere zur Eingabe von Steuerinformationen ausgestattet ist, wie z. B. mit einem eigenen Lautstärkeregler für die Lautsprechermittel. Auch diese Steuerinformationen werden vorzugsweise drahtlos an die Mobilfunkkomponente der erfindungsgemäßen Kommunikationseinrichtung übertragen. Dazu ist der Pen in einer vorteilhaften Variante mit einer eigenen Stromversorgung, beispielsweise in Form einer Batterie oder eines Akkus, ausgestattet.

Neben seiner Funktion als Bestandteil der Eingabevorrichtung und gegebenenfalls der Mobilfunkkomponente könnte der Pen auch zur Aktivierung und Deaktivierung der gesamten Kommunikationseinrichtung dienen. Dazu könnte in einer vorteilhaften Variante der erfindungsgemäßen Kommunikationseinrichtung eine Halterung für den Pen vorgesehen sein, die mit Aktivierungsmitteln für die Kommunikationseinrichtung ausgestattet ist, so daß die Kommunikationseinrichtung durch Entnehmen des Pen aus der Halterung aktiviert wird, in dem beispielsweise ein Ein-Schalter betätigt wird, und beim Einfügen des Pens in die Halterung deaktiviert wird, in dem beispielsweise ein Aus-Schalter betätigt wird.

Von besonderem Vorteil ist es, wenn die Kommunikationseinrichtung zusätzlich zu den eingangs erwähnten Komponenten noch mindestens eine Schnittstelle zum Anschluß von weiteren Funktionskomponenten aufweist. Dabei könnte es sich beispielsweise um einen Taschenrechner, ein Thermometer, einen Kompaß, einen Pager, einen Pulsmesser oder einen Umweltsensor handeln oder auch um einen sogenannten 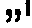 Personal Data Assistent" (PDA). All diese zusätzlichen Funktionskomponenten könnten über die Eingabevorrichtung bedient und über die Anzeigevorrichtung abgelesen werden. Besonders vorteilhaft erweist es sich in diesem Zusammenhang, wenn über die Schnittstelle ein PC an die erfindungsgemäße Kommunikationseinrichtung anschließbar ist, so daß sich die einzelnen Komponenten der erfindungsgemäßen Kommunikationseinrichtung einfach programmieren bzw. umprogrammieren lassen.

Die Anbindung weiterer Einrichtungen, wie z.B. eines PC's, PDA's oder weiterer Sensoren, kann vorteilhafterweise drahtlos erfolgen.

### Zeichnungen

- Fig. 1: zeigt eine Draufsicht und zwei Seiten Ansichten einer erfindungsgemäßen Kommunikationseinrichtung.
- Fig. 2: zeigt eine weitere Variante einer erfindungsgemäßen Kommunikationseinrichtung, die am Arm eines Benutzers getragen wird und ein Touchscreen als Eingabe- und Ausgabevorrichtung aufweist.
- Fig. 3 und 4: zeigen verschiedene Ansichten eines in Verbindung mit der in Fig. 2 dargestellten Kommunikationseinrichtung verwendeten Pens.

### Figurenbeschreibung

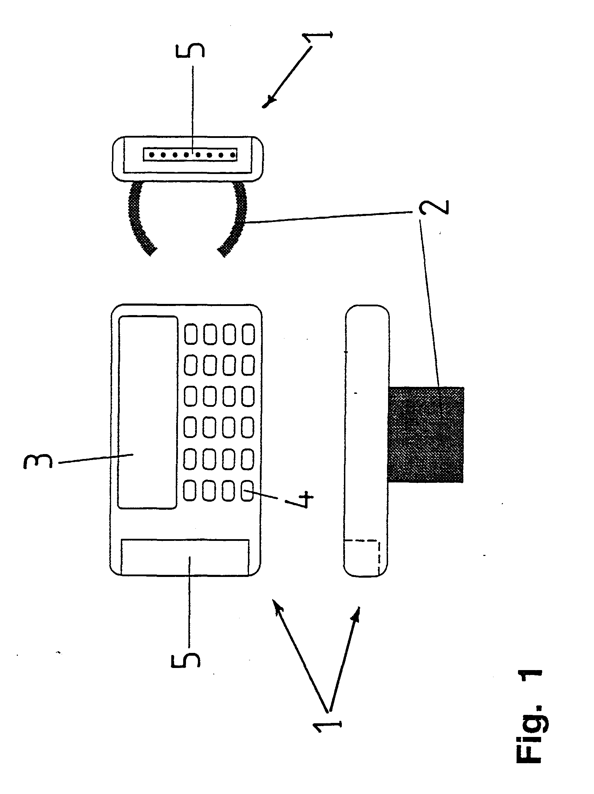

Die in Fig. 1 dargestellte Kommunikationseinrichtung 1 wird nach Art einer Armbanduhr am Handgelenk getragen, wofür sie mit einem Armband 2 ausgestattet ist. Dementsprechend weist die Kommunikationseinrichtung 1 auch eine kompakte Bauform auf, so daß sich ihre Größe insgesamt in etwa auf die Ausdehnung einer Zigarettenschachtel beschränkt.

Die hier dargestellte Kommunikationseinrichtung 1 umfaßt erfindungsgemäß eine Uhr, eine Mobilfunkkomponente, eine Anzeigevorrichtung 3 zur Wiedergabe von Informationen, eine Eingabevorrichtung 4 insbesondere zur Eingabe von Steuerinformationen, Speichermittel zum Abspeichern und wahlweisen Aufrufen von Informationen und eine Stromversorgung.

Bei der Uhr handelt es sich um eine Echtzeituhr, nämlich eine Funkuhr, die über die Anzeigevorrichtung 3 abgelesen wird. Als Anzeigevorrichtung 3 dient hier ein Flachbildschirm in Form eines LCD-Displays. Die Eingabevorrichtung 4 ist in Form einer Tastatur mit Sensortasten realisiert.

Wie bereits erwähnt ist eine Mobilfunkkomponente in die Kommunikationseinrichtung 1 integriert. Diese Mobilfunkkomponente ermöglicht in Verbindung mit der Anzeigevorrichtung 3, der Eingabevorrichtung 4 und den Speichermitteln die Nutzung einer Mailbox gegebenenfalls mit Internet e-Mail Zugriff. Über die Eingabevorrichtung 4 in Verbindung mit der Mobilfunkkomponente kann der Benutzer nämlich gezielt Informationen abrufen, die dann auch als mehrzeilige Texte auf der Anzeigevorrichtung 3 wiedergegeben werden. Die Speichermittel können beispielsweise zum Abspeichern eines Telefonregisters oder von e-Mail-Adressen genutzt werden und auch als Zwischenspeicher für aus dem Internet geladene Informationen.

Die in Fig. 1 dargestellte Kommunikationseinrichtung 1 ist ferner noch mit einer Schnittstelle 5 in Form einer Docking Bay ausgestattet, an die über elektrische und mechanische Stecker weitere Funktionskomponenten, wie z. B. ein Taschenrechner, ein Thermometer, ein Kompaß, ein Pager, ein Pulsmesser oder ein Umweltsensor angeschlossen werden können. Die Docking Bay 5 dient hier in erster Linie zur Erweiterung des Funktionsumfangs auf individueller Basis. Bei entsprechender Ausgestaltung kann sie auch als Schnittstelle zu einem PC genutzt werden, über den dann beispielsweise die Mailbox oder die Mobilfunkkomponente programmiert werden können.

Als Stromversorgung könnten beispielsweise schnell ladende Akkus dienen.

Die in Fig. 1 dargestellte Kommunikationseinrichtung stellt eine Möglichkeit der Integration verschiedener Kommunikationsdienste in einem einzigen kompakten Gerät dar, das benutzerfreundlich am Arm getragen werden kann. Über die Schnittstelle 5 kann diese Kommunikationseinrichtung 1 noch durch weitere Funktionskomponenten erweitert werden und auf diese Weise an die individuellen Bedürfnisse eines Benutzers angepaßt werden. Außerdem besteht die Möglichkeit, einzelne Komponenten der erfindungsgemäßen Kommunikationseinrichtung 1 mit Hilfe eines an die Schnittstelle 5 angeschlossenen PC's individuell, auf die Bedürfnisse des Benutzers zugeschnitten zu programmieren.

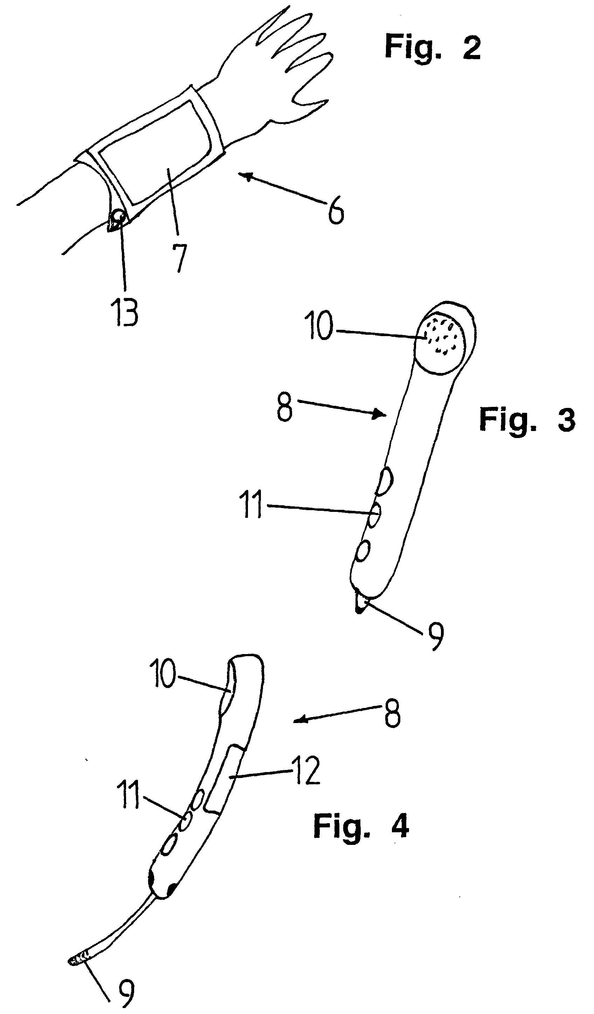

Fig. 2 zeigt eine weitere Ausführungsform einer erfindungsgemäßen Kommunikationseinrichtung, die genauso wie die in Fig. 1 dargestellte Kommunikationseinrichtung am Handgelenk eines Benutzers getragen wird. Im Gegensatz zu der in Fig. 1 dargestellten Kommunikationseinrichtung ist die in Fig. 2 dargestellte Kommunikationseinrichtung 6 mit einem Touchscreen 7 ausgestattet, das sowohl als Eingabevorrichtung als auch als Anzeigevorrichtung dient. Die Bedienung dieses Touchscreens 7 erfolgt - ähnlich wie bei den aus der Praxis bekannten Personal Digital Assistents (PDA) - im hier dargestellten Fall mit Hilfe eines Pens 8, der in den Figuren 3 und 4 nochmals im Detail dargestellt ist.

Genau wie die in Fig. 1 dargestellte Kommunikationseinrichtung umfaßt die in Fig. 2 dargestellte Kommunikationseinrichtung 6 eine Mobilfunkkomponente, die beispielsweise nach GSM oder UMTS-Standard arbeitet. Im hier dargestellten Ausführungsbeispiel kann das Touchscreen 7 neben den üblichen PDA-Funktionen, wie Notizbuch, Taschenrechner, Spreadsheet, etc., auch zur Darstellung von Multimedia-Inhalten verwendet werden, die über die Multimediakomponente aus dem Internet abgerufen werden können. Die Mobilfunkkomponente in Verbindung mit dem Touchscreen 7 ermöglicht auch die Durchführung von Videokonferenzen mit der erfindungsgemäßen Kommunikationseinrichtung 6.

Wie bereits erwähnt, erfolgt die Bedienung des Touchscreens 7 über den Pen 8. Dieser dient im hier dargestellten Ausführungsbeispiel auch gleichzeitig als Hörer für die Mobilfunkkomponente und ist dazu mit einem Mikrofon 9 und Lautsprechermitteln 10 in Form einer Miniaturhörkapsel ausgestattet. Der Abstand zwischen dem Mikrofon 9 und der Miniaturhörkapsel 10 ist variierbar, indem der Pen 8 ausziehbar ist. Im hier dargestellten Ausführungsbeispiel wird der Pen 8 nur dann verlängert, wenn er als Hörer verwendet werden soll. Der Pen 8 ist drahtlos mit der übrigen Mobilfunkkomponente, die in die am Arm getragene Einrichtung integriert ist, verbunden. Diese drahtlose Verbindung könnte per Infrarot, Funk oder auch als modulierter Wechselstrom durch den Körper des Benutzers realisiert sein. Zusätzlich ist der Pen 8 noch mit Eingabemitteln in Form von mehreren Tasten 12 ausgestattet, mit denen sich beispielsweise die Lautstärke der Miniaturhörkapsel 10 regulieren läßt, aber auch andere Bedienerprozeduren gesteuert werden können. Auch die Tastendrücke werden drahtlos an die am Arm des Benutzers getragene Einrichtung übermittelt. Der Pen 8 verfügt über eine eigene Stromversorgung in Form einer Batterie oder eines Akkus 12, die bzw. der über die Einrichtung am Arm geladen wird.

Die hier dargestellte Kommunikationseinrichtung 6 ist mit einer Halterung 13 für den Pen 8 ausgestattet. Der Pen 8 wird an diese Halterung 13 angeklemmt oder in die Halterung 13 eingeschoben. Durch Entnehmen des Pens 8 wird die Kommunikationseinrichtung 6 automatisch eingeschaltet, und umgekehrt wird die Kommunikationseinrichtung 6 durch Anklemmen bzw. Hineinschieben des Pens 8 in die Halterung 13 wieder abgeschaltet.

Insgesamt stellt auch die in den Figuren 2 bis 4 dargestellte Kommunikationseinrichtung 6 ein kompaktes Gerät dar, in dem verschiedene Kommunikationsdienste integriert sind. Da diese Kommunikationseinrichtung 6 einfach am Handgelenk eines Benutzers getragen werden kann, ist sie für den Benutzer unaufdringlich aber ständig einsatzbereit. Die spezielle Ausgestaltung mit einem Touchscreen 7 und einem als Hörer verwendbaren Pen 8 ermöglicht zusätzlich eine sehr ergonomische Bedienung.

## Patentansprüche

1. Kommunikationseinrichtung (1), die nach Art einer Armbanduhr vorzugsweise am Handgelenk tragbar ist, mindestens umfassend
- eine Uhr,
- eine Mobilfunkkomponente,
- eine Anzeigevorrichtung (3) zur Wiedergabe von Informationen,
- eine Eingabevorrichtung (4) insbesondere zur Eingabe von Steuerinformationen,
- Speichermittel zum Abspeichern und wahlweisen Aufrufen von Informationen und
- eine Stromversorgung.

2. Kommunikationseinrichtung (1) nach Anspruch 1, dadurch gekennzeichnet, daß es sich bei der Uhr um eine Echtzeituhr, vorzugsweise eine Funkuhr, handelt.

3. Kommunikationseinrichtung (1) nach einem der Ansprüche 1 oder 2, dadurch gekennzeichnet, daß es sich bei der Anzeigevorrichtung (3) um einen Flachbildschirm, vorzugsweise ein LCD-Display, handelt.

4. Kommunikationseinrichtung (1) nach einem der Ansprüche 1 oder 2, dadurch gekennzeichnet, daß es sich bei der Anzeigevorrichtung (3) um ein Virtual Retinal Display handelt.

5. Kommunikationseinrichtung (1) nach einem der Ansprüche 1 bis 4, dadurch gekennzeichnet, daß die Eingabevorrichtung (4) eine Tastatur, vorzugsweise mit Sensortasten, umfaßt.

6. Kommunikationseinrichtung (6) nach einem der Ansprüche 1 bis 5, dadurch gekennzeichnet, daß die Eingabevorrichtung ein Touchscreen (7) umfaßt.

7. Kommunikationseinrichtung (6) nach Anspruch 6, dadurch gekennzeichnet, daß das Touchscreen (7) auch als Anzeigevorrichtung dient.

8. Kommunikationseinrichtung (6) nach einem der Ansprüche 6 oder 7, dadurch gekennzeichnet, daß die Eingabevorrichtung einen Pen (8) zur Bedienung des Touchscreen (7) umfaßt.

9. Kommunikationseinrichtung (6) nach Anspruch 8, dadurch gekennzeichnet, daß der Pen (8) als Hörer für die Mobilfunkkomponente dient, indem er ein Mikrofon (9) und Lautsprechermittel (10) umfaßt.

10. Kommunikationseinrichtung (6) nach Anspruch 9, dadurch gekennzeichnet, daß die Lautsprechermittel (10) eine Miniaturhörkapsel umfassen.

11. Kommunikationseinrichtung (6) nach einem der Ansprüche 9 oder 10, dadurch gekennzeichnet, daß der als Hörer dienende Pen (8) ausziehbar ist.

12. Kommunikationseinrichtung (6) nach einem der Ansprüche 9 bis 11, dadurch gekennzeichnet, daß eine drahtlose Verbindung zwischen dem Pen (8) und der übrigen Mobilfunkkomponente besteht.

13. Kommunikationseinrichtung (6) nach Anspruch 12, dadurch gekennzeichnet, daß die drahtlose Verbindung per Infrarot, Funk oder als modulierter Wechselstrom durch den Körper des Benutzers realisiert ist.

14. Kommunikationseinrichtung (6) nach einem der Ansprüche 9 bis 13, dadurch gekennzeichnet, daß der Pen (8) mit Eingabemitteln (11) insbesondere zur Eingabe von Steuerinformationen ausgestattet ist.

15. Kommunikationseinrichtung (6) nach einem der Ansprüche 9 bis 14, dadurch gekennzeichnet, daß der Pen (8) mit einer eigenen Stromversorgung (12) ausgestattet ist.

16. Kommunikationseinrichtung (6) nach einem der Ansprüche 8 bis 15, dadurch gekennzeichnet, daß eine Halterung (13) für den Pen (8) vorgesehen ist und daß die Halterung (13) mit Aktivierungsmitteln für die Kommunikationseinrichtung (6) ausgestattet ist, so daß die Kommunikationseinrichtung (6) durch Entnehmen des Pen (8) aus der Halterung (13) aktiviert wird und beim Einfügen des Pen (8) in die Halterung (13) deaktiviert wird.

17. Kommunikationseinrichtung (1) nach einem der Ansprüche 1 bis 16, dadurch gekennzeichnet, daß mindestens eine Schnittstelle (5) zum Anschluß von weiteren Funktionskomponenten vorgesehen ist.

18. Kommunikationseinrichtung (1) nach Anspruch 17, dadurch gekennzeichnet, daß als weitere Funktionskomponenten ein Taschenrechner, eine Thermometer, ein Kompass, ein Pager, ein Pulsmesser oder ein Umweltsensor anschließbar sind.

19. Kommunikationseinrichtung (1) nach den Ansprüchen 17 oder 18, dadurch gekennzeichnet, daß ein Personal Data Assistent (PDA) oder ein PC über die Schnittstelle (5) anschließbar ist.

20. Kommunikationseinrichtung (1) nach einem der Ansprüche 17 bis 19, dadurch gekennzeichnet, daß die Schnittstelle (5) drahtlos, vorzugsweise als Funk- oder Infrarot-Schnittstelle, ausgelegt ist.
